(19) Europäisches Patentamt / European Patent Office / Office européen des brevets

(11) **EP 2 879 009 A1**

(12) **EUROPEAN PATENT APPLICATION**
published in accordance with Art. 153(4) EPC

(43) Date of publication:
**03.06.2015 Bulletin 2015/23**

(51) Int Cl.:
**G05D 1/02** (2006.01)    **B25J 5/00** (2006.01)
**B62D 57/02** (2006.01)

(21) Application number: **12880022.4**

(22) Date of filing: **29.06.2012**

(86) International application number:
**PCT/JP2012/066785**

(87) International publication number:
**WO 2014/002275 (03.01.2014 Gazette 2014/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Kabushiki Kaisha Yaskawa Denki
Kitakyushu-shi, Fukuoka 806-0004 (JP)**

(72) Inventor: **TAKASE, Yoshiyasu
Kitakyushu-shi
Fukuoka 806-0004 (JP)**

(74) Representative: **Grünecker Patent- und
Rechtsanwälte
PartG mbB
Leopoldstraße 4
80802 München (DE)**

(54) **MOVING BODY AND MOVING BODY SYSTEM**

(57)    An object of the invention is to provide a mobile body and a mobile body system having a simple configuration to climb up a step. To solve the problem, according to one aspect of an embodiment, the mobile body (1) includes a moving unit (20), an upper body (10), and a control unit (23a). The moving unit (20) has a plurality of front and rear driving wheels (22, 24) disposed along a traveling direction. The upper body (10) is supported at the moving unit (20), and is provided to be able to change a gravity center position in the traveling direction. The control unit (23a) instructs the upper body (10) to change the gravity center position depending on a road condition.

EP 2 879 009 A1

**Description**

Field

A disclosed embodiment relates to a mobile body and a mobile body system.

Background

Conventionally, mobile robots are known which include movement mechanisms using wheels and run and move on a floor surface or the like. The mobile robots are used for various applications such as transporting an article or guiding a guest in various places, for example, in a factory, a laboratory, or an office.

However, such a floor surface often has a step due to convenience in cabling, working layout, or the like. When the step has a height larger than the radius of the wheel, it is difficult for the movement mechanism using a wheel to climb up the step.

For this reason, a mobile robot has been proposed which includes a movement mechanism such as a caterpillar, for movement without restriction by the step, or which includes a leg wheel mechanism having a wheel at an end of an extensible leg provided at a main body (e.g., see Patent Literature 1).

Citation List

Patent Literature

Patent Literature 1: Japanese Patent Application Laid-open No. 2003-205480

Summary

Technical Problem

However, the conventional mobile robot has been required to improve a complicated mechanism thereof, such as the caterpillar or the leg wheel mechanism, in order to climb up a step.

Further, there has been a problem that the complicated mechanism requires much power for normal movement, and thus has a low running efficiency. On the other hand, a movement mechanism simply using a wheel has a simple configuration and has a high running efficiency, but when the step has a height larger than the radius of the wheel as described above, it is impossible for the movement mechanism to climb up the step.

Such problems are common to all mobile bodies in addition to the mobile robots.

One aspect of the embodiment has been made in view of the above-mentioned problems, and it is an object of the embodiment to provide a mobile body and a mobile body system which have a simple configuration to climb up a step.

Solution to Problem

A mobile body according to an aspect of an embodiment includes a moving unit, an upper body, and a control unit. The moving unit has a plurality of front and rear driving wheels disposed along a traveling direction. The upper body is supported at the moving unit, and is configured to be able to change a gravity center position in the traveling direction. The control unit is configured to instruct the upper body to change the gravity center position depending on a road condition.

Advantageous Effects of Invention

According to an aspect of an embodiment, a simple configuration makes it possible to climb up a step.

Brief Description of Drawings

FIG. 1A is a schematic front view illustrating a configuration of a mobile robot according to an embodiment.

FIG. 1B is a schematic side view illustrating the configuration of the mobile robot according to the embodiment.

FIG. 2A is an explanatory diagram (part1) illustrating a basic concept of climbing up a step.

FIG. 2B is an explanatory diagram (part2) illustrating a basic concept of climbing up a step.

FIG. 3 is a block diagram illustrating a configuration of the mobile robot.

FIG. 4 is an explanatory diagram illustrating gravity center position control processing performed by a gravity center position changing unit.

FIG. 5 is an explanatory graph illustrating anti-slip control processing in a step-climbing control unit.

FIG. 6 is a flowchart illustrating an operation sequence of the mobile robot.

FIG. 7A is a schematic side view illustrating a configuration of a mobile robot according to a first modification.

FIG. 7B is a schematic side view illustrating a configuration of a mobile body according to a second modification.

Description of Embodiments

An embodiment of a mobile body and a mobile body system which are disclosed in the present application will be described below in detail with reference to the accompanying drawings. It is noted that the present invention is not limited to the embodiment described below.

It is assumed that, in the embodiment described below, the mobile body is a mobile robot including a movement mechanism. It is further noted that a "step surface" represents a side wall surface forming a step.

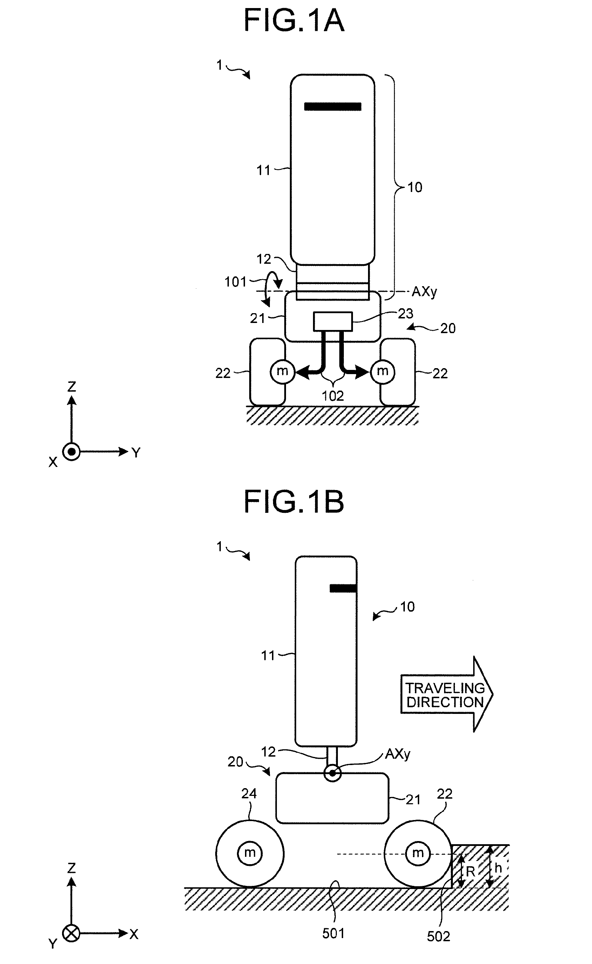

FIG. 1A is a schematic front view illustrating a configuration of the mobile robot 1 according to the embodiment. Further, FIG. 1B is a schematic side view illustrating the configuration of the mobile robot 1 according to the embodiment.

It is noted that each view, including FIGS. 1A and 1B, schematically illustrates the mobile robot 1 from the viewpoint of clear description. Therefore, it looks as if a front wheel 22 and a rear wheel 24 (both described below) are separated from a frame 21 (described below), but the wheels are connected to the frame 21 in practice.

It is noted that, in FIGS. 1A and 1B, a three-dimensional orthogonal coordinate system including a Z-axis being positive upward is illustrated for clear description. Therefore, a direction along an XY plane denotes a "horizontal direction". Such an orthogonal coordinate system is illustrated appropriately sometimes in other drawings used for the following description. It should be considered that, in description of the present embodiment, the mobile robot 1 is moved in the positive direction of an X axis as a traveling direction (see FIG. 1B).

As illustrated in FIG. 1A, the mobile robot 1 includes an upper body 10 and a moving unit 20. The upper body 10 includes a trunk part 11 and a waist part 12.

The moving unit 20 includes the frame 21 and one pair of the front wheels 22. The front wheels 22 have motors m in a one-to-one correspondence relationship. Each of the motors m drives the corresponding front wheel 22. Accordingly, any of the front wheels 22 is a driving wheel.

As illustrated in FIG. 1B, the moving unit 20 also includes the rear wheels 24. It is noted that the moving unit 20 also includes one pair of the rear wheels 24 which are not illustrated in FIG 1B. The rear wheels 24 also have motors m in a one-to-one correspondence relationship, and are driven by the motors m. Accordingly, any of the rear wheels 24 is also a driving wheel. That is, the moving unit 20 drives the four wheels.

It is noted that the moving unit 20 may not drive the four wheels as long as the wheels correspond to the motors m one by one. For example, the moving unit may drive two wheels of one front wheel and one rear wheel, or may drive three wheels of two front wheels and one rear wheel.

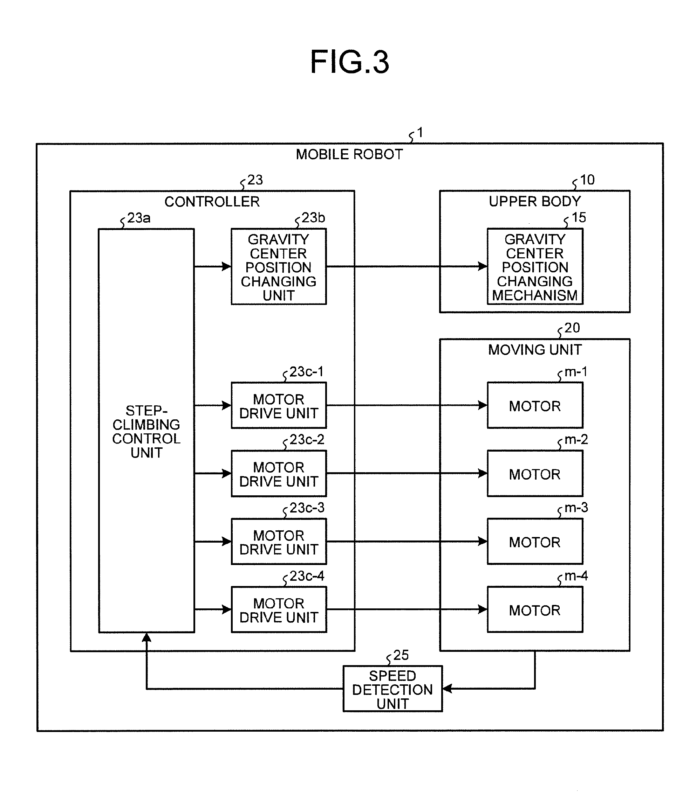

In such a configuration, as illustrated in FIG. 1A, the motors m are controlled separately by a controller 23 housed in the frame 21 (see arrows 102 in the figure). It is noted that an arrangement position of the controller 23 is not limited to the illustrated example. For example, the controller may be arranged to be separated from the mobile robot 1 for remote control through wireless communication. A detailed configuration of the controller 23 will be described later using FIG. 3.

Further, as illustrated in FIGS. 1A and 1B, the frame 21 supports the upper body 10 at the waist part 12 rotatably about a waist axis AXy (see both arrows 101 in FIG. 1A). Therefore, the whole of the upper body 10 is rotated about the waist axis AXy at the waist part 12 to change a gravity center position thereof.

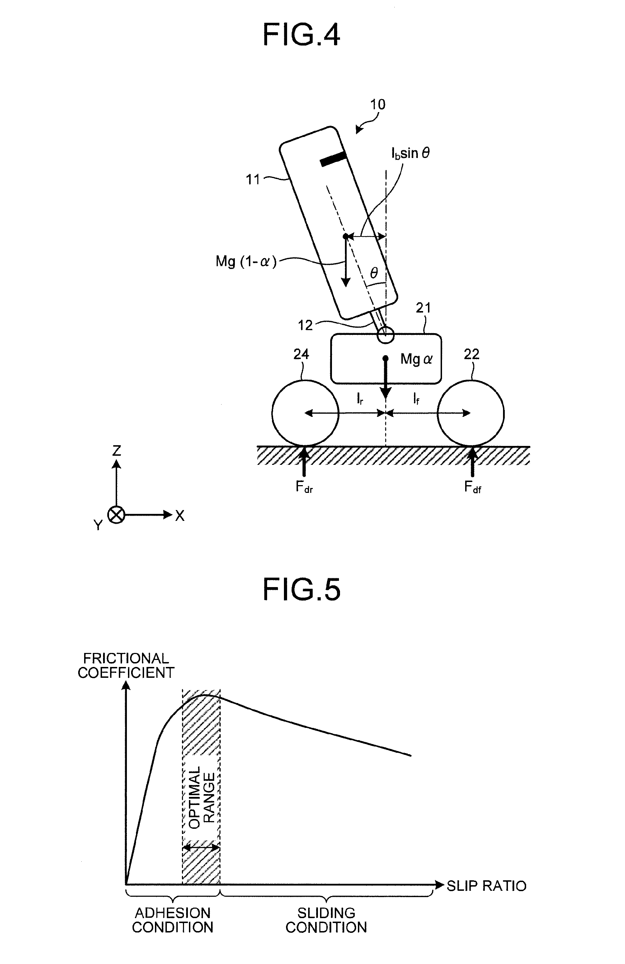

It is noted that the waist axis AXy is a rotating axis substantially orthogonal to the traveling direction when viewed from above. Further, it is noted that the rotating angle of the waist part 12 is controlled by the above-mentioned controller 23. Detailed description thereof will be described below using FIG. 4.

As illustrated in FIG. 1B, when the mobile robot 1 according to the embodiment abuts against a step surface 502 having a height h larger than a radius R of the wheel while running on a floor surface 501, the mobile robot controls slip ratios of all the driving wheels while changing the gravity center position. Accordingly, the front and rear wheels 22 and 24 surely grip the floor surface 501 and the step surface 502 to climb up a step.

This control will be sequentially described below in detail. In the present embodiment, the description will be made on condition that the one pair of the front wheels 22 simultaneously abuts against the step surface 502. Further, it should be considered that the step surface 502 is perpendicular to the floor surface 501.

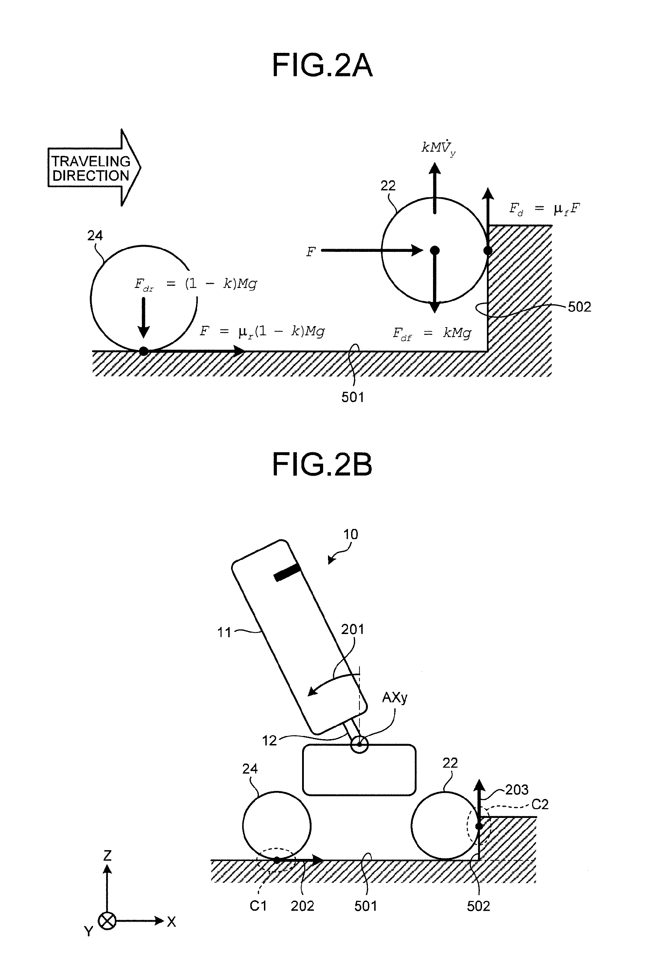

First, a basic concept of climbing up the step by the mobile robot 1 will be described using FIGS. 2A and 2B. FIGS. 2A and 2B are explanatory diagrams illustrating a basic concept of climbing up the step. It is noted that FIG. 2A schematically illustrates the front and rear wheels 22 and 24 which are required for description.

Generally, it is difficult for a movement mechanism using a wheel to climb up the step having the height h larger than the radius R of the wheel. However, in such a condition, when adhesion conditions between the front wheel 22 and the step surface 502, and between the rear wheel 24 and the floor surface 501 are maintained, or when the front and rear wheels 22 and 24 keep gripping the step surface and the floor surface, respectively, without slipping, the movement mechanism can climb up the step.

Now, a specific description will be made. First, the weight of the mobile robot 1 (hereinafter referred to as "vehicle body weight") is denoted by M, a gravitational acceleration is denoted by g, and a weight ratio of the front wheel 22 to the vehicle body weight M is denoted by k. Further, a frictional coefficient between the front wheel 22 and the step surface 502 is denoted by $\mu_f$, and a frictional coefficient between the rear wheel 24 and the floor surface 501 is denoted by $\mu_r$.

In such a condition, as illustrated in FIG. 2A, "$F = \mu_r(1 - k)Mg$" is satisfied, where F represents a pressing force against the step surface 502. Also, "$F_d = \mu_f F$" is satisfied, where $F_d$ represents a driving force applied on the step surface 502.

Further, as illustrated in FIG. 2A, a load $F_{df}$ applied on the front wheel 22 is expressed by "$F_{df} = kMg$", and a load $F_{dr}$ applied on the rear wheel 24 is expressed by "$F_{dr} = (1 - k)Mg$".

Based on these relational expressions, a vertical movement of the front wheel 22 is expressed by the following formula (1), wherein upward displacement is denoted by Vy.
[Formula 1]

$$kM\dot{V}_y = F_d - F_{df} = \mu_f F - kMg = \mu_f\{\mu_r(1-k)M\} - Mkg \qquad \cdots (1)$$

Based on formula (1), in the present embodiment, "step-climbing control" is carried out in order to raise the mobile robot 1. In the "step-climbing control", the weight ratio k of the front wheel 22 to the vehicle body weight M (hereinafter sometimes referred to as "parameter k") is reduced, and the frictional coefficient $\mu_f$ and the frictional coefficient $\mu_r$ are increased.

Specifically, in the present embodiment, as illustrated in FIG. 2B, the front wheel 22 moves forward until abutting against the step surface 502. When the pressing force F is secured, the waist part 12 is rotated about the waist axis AXy. When the inclination of the trunk part 11 is changed, the gravity center position of the upper body 10 is changed (see arrow 201 in the figure). Therefore, the parameter k is reduced, and the load $F_{df}$ applied on the front wheel 22 is reduced.

As illustrated in FIG. 2B, the slip ratios of the front and rear wheels 22 and 24 are controlled to be within an optimal range to maintain the high frictional coefficients $\mu_f$ and $\mu_r$. The wheels move forward while maintaining areas defined by closed curves C1 and C2 in the adhesion condition (see arrow 202 in the figure), and the front wheel 22 is raised (see arrow 203 in the figure).

Therefore, according to the present embodiment, a simple configuration using a wheel is employed to climb up the step having the height larger than the radius of the wheel. Further, the configuration is simplified and is advantageously reduced in size and low in cost.

Next, a block configuration of the mobile robot 1 including the controller 23 for performing the above-mentioned "step-climbing control" will be described using FIG. 3. FIG. 3 is a block diagram illustrating a configuration of the mobile robot 1.

It is noted that, in FIG. 3, only components necessary for description of the present embodiment are illustrated, and illustration of general components is omitted. Further, a plurality of components is indicated by a reference sign followed by "-numbers", but when the plurality of components is described collectively, only the reference sign may be used without the "-numbers" for the description.

As illustrated in FIG. 3, the mobile robot 1 includes the upper body 10, the moving unit 20, the controller 23, and a speed detection unit 25.

Further, the upper body 10 includes a gravity center position changing mechanism 15. The gravity center position changing mechanism 15 rotates the waist part 12 about the waist axis AXy. Further, the moving unit 20 includes the motors m corresponding to the respective wheels.

Further, the controller 23 includes a step-climbing control unit 23a, a gravity center position changing unit 23b, and motor drive units 23c corresponding to the respective motors m.

The step-climbing control unit 23a totally controls the step-climbing control. Specifically, first, when the step-climbing control is performed, the step-climbing control unit 23a generates and outputs, for the gravity center position changing unit 23b, a command for operating the gravity center position changing mechanism 15 in order to reduce the parameter k.

The gravity center position changing unit 23b determines the rotating angle of the waist part 12 so that the parameter k is reduced to an optimal value and instructs the gravity center position changing mechanism 15 to rotate the waist part 12 by the determined rotating angle.

Now, detailed description of processing performed by the gravity center position changing unit 23b will be made using FIG. 4. FIG. 4 is an explanatory diagram illustrating gravity center position control processing performed by the gravity center position changing unit 23b.

As illustrated in FIG. 4, a ratio of the weight of the frame 21 to the vehicle body weight M is denoted by $\alpha$, a ratio of the weight of the upper body 10 to the vehicle body weight M is denoted by $(1 - \alpha)$, a distance in the X-axis direction, from a vehicle gravity center to the front wheel 22, is denoted by $l_f$, a distance in the X-axis direction, from the vehicle gravity center to the rear wheel 24, is denoted by $l_r$, inclination of the upper body 10 is denoted by $\theta$, and a distance from the vehicle gravity center to a gravity center of the upper body 10 is denoted by $l_b$. As described above, the load applied on the front wheel 22 is denoted by $F_{df}$, and the load applied on the rear wheel 24 is denoted by $F_{dr}$.

The load $F_{df}$ is derived from the following formulas (2) and (3) in consideration of equilibrium of vertical forces and a moment about the vehicle gravity center.

[Formula 2]

$$\begin{cases} F_{dr} + F_{df} = Mg\alpha + (1-\alpha)Mg \\ F_{dr}l_r - F_{df}l_f - (1-\alpha)Mgl_b \sin\theta = 0 \end{cases} \quad \cdots (2)$$

[Formula 3]

$$F_{df} = \left( \frac{l_r + (\alpha - 1)l_b \sin\theta}{l_r + l_f} \right) Mg = kMg \quad \cdots (3)$$

Accordingly, when the formula (3) is solved in terms of the parameter k, the following formula (4) can be derived.

[Formula 4]

$$k = \frac{l_r + (\alpha - 1)l_b \sin\theta}{l_r + l_f} \quad \cdots (4)$$

The driving force $F_d$ applied to the step surface 502 is larger than the load $F_{df}$ applied on the front wheel 22 in order that the front wheel 22 climbs up the step surface 502, and thus a relationship expressed by the following formula (5) is established.

[Formula 5]

$$F_d > F_{df} \quad \cdots (5)$$

When "$F_d = \mu_f F$" and "$F_{df} = kMg$" which have been described in FIG. 2A are applied to both sides of the formula (5), the following formula (6) can be obtained.

[Formula 6]

$$\mu_f F > kMg \quad \cdots (6)$$

When the formula (6) is solved in terms of the parameter k, the following formula (7) can be derived.

[Formula 7]

$$k < \frac{\mu_f F}{Mg} \quad \cdots (7)$$

When the formula (4) is applied to the parameter k on the left side of the formula (7), a relationship expressed by the following formula (8) is established.
[Formula 8]

$$\frac{l_r + (\alpha - 1)l_b \sin \theta}{l_r + l_f} < \frac{\mu_f F}{Mg} \qquad \cdots (8)$$

Accordingly, the gravity center position changing unit 23b preferably determines the inclination θ (i.e. rotating angle of waist part 12) so that the relationship expressed by the following formula (8) is satisfied.

Description of FIG. 3 will be continued. The step-climbing control unit 23a maintains the high frictional coefficients $\mu_f$ and $\mu_r$, and controls the front and rear wheels 22 and 24 to securely grip the step surface 502 and the floor surface 501 without slipping (hereinafter, referred to as "anti-slip control").

The step-climbing control unit 23a generates and outputs, for the motor drive unit 23c, the command for driving the motor m based on the anti-slip control. It is noted that the command includes a control value for controlling a torque (driving force) of the motor m.

Using FIG. 5, the anti-slip control processing in the step-climbing control unit 23a will be described in detail. FIG. 5 is an explanatory graph illustrating the anti-slip control processing in the step-climbing control unit 23a.

It is noted that the anti-slip control is included in so-called "slip control" for controlling the slip ratio representing a speed difference between the motor m and the mobile body (mobile robot 1) based on an actual speed (including acceleration) of the mobile body. The "slip control" is a known technique, and a detailed description thereof is therefore omitted.

FIG. 5 illustrates a curved line on a graph in which the slip ratio is represented on a horizontal axis and the frictional coefficient is represented on a vertical axis. As illustrated in FIG. 5, in a relationship between the slip ratio and the frictional coefficient, the frictional coefficient tends to increase to an extent as the slip ratio increases, but the frictional coefficient tends to decrease when the slip ratio exceeds the "optimal range".

Therefore, in general, when the torque of the motor m is increased easily to obtain a large driving force, the speed difference between the motor m and the mobile body is easily increased, that is, the slip ratio is easily increased. Therefore, a "sliding condition" which has a small frictional coefficient, as illustrated in FIG. 5, is easily brought about.

Therefore, in such a condition, it is difficult for the mobile robot 1 to climb up the step. On the other hand, when the torque of the motor m is excessively restricted, the speed difference between the motor m and the mobile body is reduced, but the frictional coefficient might be insufficient.

The speed of the mobile robot 1 is obtained from the speed detection unit 25. Based on the obtained speed, the step-climbing control unit 23a appropriately calculates a control value for controlling the torque of the motor m so that the slip ratio falls within the optimal range. The calculated control value is used to output the command for driving the motor m to the motor drive unit 23c.

Description of FIG. 3 will be continued. The motor drive unit 23c drives the motor m based on the control value included in the command from the step-climbing control unit 23a.

The gravity center position changing mechanism 15 actually rotates the waist part 12 by the rotating angle of the waist part 12. The rotating angle is included in the instruction having been received from the gravity center position changing unit 23b. The gravity center position of the upper body 10 is thus changed. The motors m drive the corresponding driving wheels (front and rear wheels 22 and 24), respectively, and the moving unit 20 actually runs.

The speed detection unit 25 appropriately detects an actual speed of the mobile robot 1 and feeds back the speed to the step-climbing control unit 23a.

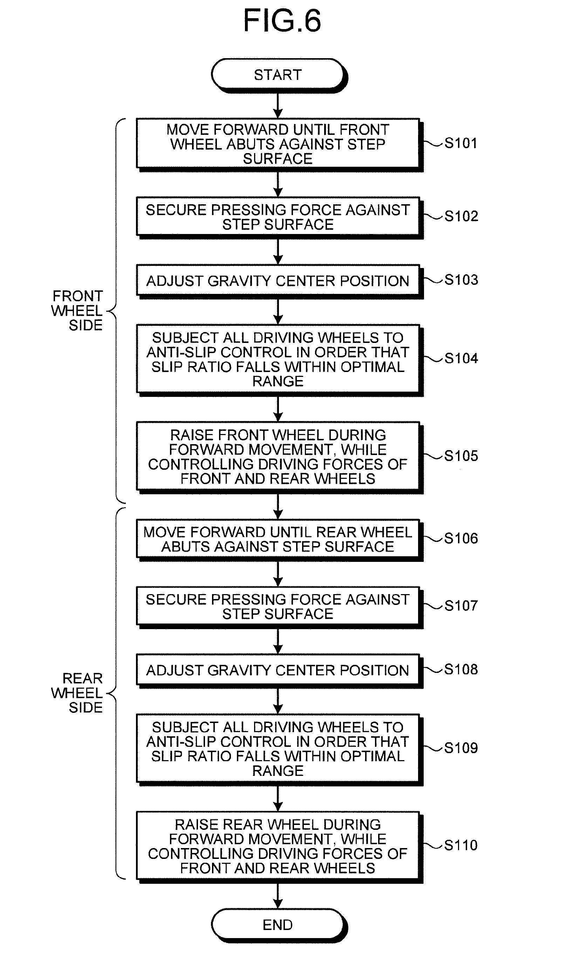

Next, using FIG. 6, an operation sequence of the mobile robot 1 according to the embodiment will be described. FIG. 6 is a flowchart illustrating the operation sequence of the mobile robot 1. In FIG. 6, the operation sequence upon climbing up the step is mainly illustrated. Operation control performed in the front and rear wheels 22 and 24 is substantially similar to each other, but both operation control is illustrated in FIG. 6.

First, the operation sequence of the front wheel 22 will be described. As illustrated in FIG. 6, the mobile robot 1 moves forward until the front wheel 22 abuts against the step surface 502 (step S101), and secures the pressing force F against the step surface 502 (step S102).

Based on control by the step-climbing control unit 23a of the controller 23, the gravity center position of the upper body 10 is adjusted (step S103).

Next, based on the control by the step-climbing control unit 23a, all the driving wheels (i.e. front and rear wheels 22 and 24) are subjected to the anti-slip control (step S104) in order that the slip ratio falls within the optimal range.

The front wheel 22 is raised during the forward movement, while controlling driving forces of the front and rear wheels 22 and 24 based on the above-mentioned anti-slip control (step S105).

Next, the operation sequence of the rear wheel 24 will be described. It is noted that, during the operation control of the rear wheel 24, the front wheel 22 is driven gripping an upper floor surface of the step which the front wheel 22 has climbed up, while maintaining the frictional coefficient between the front wheel and the upper floor surface.

As illustrated in FIG. 6, as in the operation control of the front wheel 22, the mobile robot 1 moves forward until the rear wheel 24 abuts against the step surface 502 (step S106), and secures the pressing force F against the step surface 502 (step S107).

Based on the control by the step-climbing control unit 23a of the controller 23, the gravity center position of the upper body 10 is adjusted (step S108).

Next, based on the control by the step-climbing control unit 23a, all the driving wheels are subjected to the anti-slip control (step S109) in order that the slip ratio falls within the optimal range.

The rear wheel 24 is raised during the forward movement, while controlling the driving forces of the front and rear wheels 22 and 24 based on the above-mentioned anti-slip control (step S110), and a series of operations for climbing up the step is finished.

As described above, the mobile robot (mobile body) according to the embodiment includes the moving unit, the upper body, and the step-climbing control unit (control unit). The moving unit has a plurality of front and rear driving wheels disposed along the traveling direction. The upper body is supported at the moving unit, and is provided to be able to change the gravity center position in the traveling direction. The step-climbing control unit instructs the upper body to change the gravity center position depending on a road condition.

Therefore, the mobile robot according to the embodiment can climb up the step with the simple configuration.

Now, it is to be understood that, in the above-mentioned embodiment, the waist part of the upper body is exemplified to rotate about the waist axis to incline the whole upper body in order to change the gravity center position of the upper body, but the present embodiment is not limited to the above-mentioned embodiment. Further, the mobile body may not be the mobile robot.

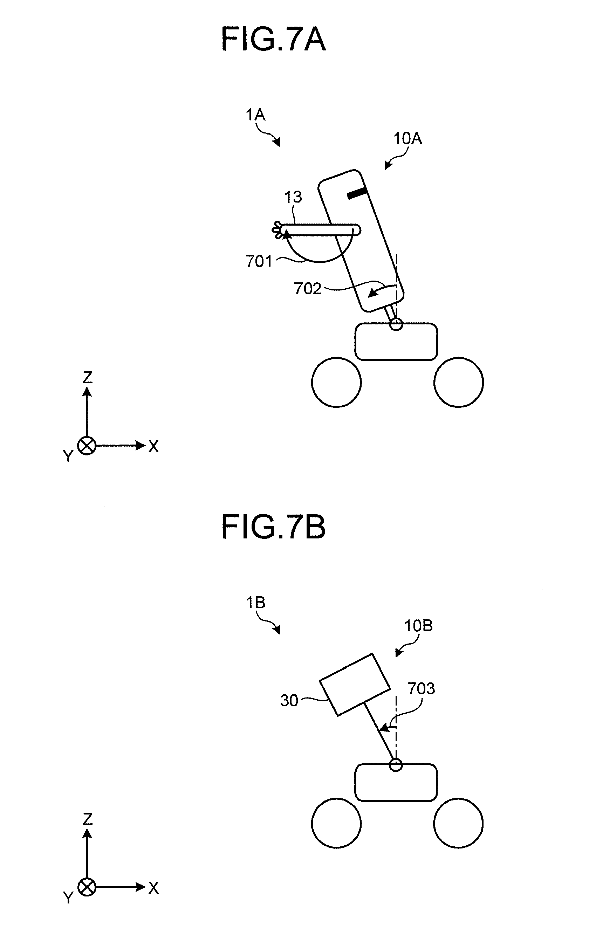

Modifications of the present embodiment will be described using FIGS. 7A and 7B. FIG. 7A is a schematic side view illustrating a configuration of a mobile robot 1A according to a first modification. FIG. 7B is a schematic side view illustrating a configuration of a mobile body 1B according to a second modification.

As illustrated in FIG. 7A, the mobile robot 1A according to the first modification includes an arm 13 at an upper body 10A. In this mobile robot 1A, the arm 13 is, for example, swung (see arrow 701 in the figure) to change a gravity center position of the upper body 10A.

It is to be understood that, as illustrated in FIG. 7A, movement of the arm 13 and movement about a waist axis (see arrow 702 in the figure) may be combined in use.

Further, it is to be understood that, as illustrated in FIG. 7B, the present embodiment may be configured not as the mobile robot but as the mobile body 1B, and may include a balancer 30 as an upper body 10B. In such a configuration, similar to the above-mentioned embodiment or modification, the balancer 30 is inclined (see arrow 703 in the figure) to change a gravity center position of the upper body 10B.

The change of inclination for changing the gravity center position has been described above, but it is to be understood that it does not limit a technique for changing the gravity center position. For example, the gravity center position may be changed by moving a fluid.

In the above-mentioned embodiment, Fig. 1 illustrates the motor as an in-wheel motor mounted in a hub of the wheel, but it is to be understood that it does not limit a configuration of the drive unit for driving the wheel. For example, the embodiment may be configured to combine a reduction gear with the motor in order to drive the wheel.

The above-mentioned embodiment exemplifies climbing up the step having the step surface perpendicular to the floor surface, but it is to be understood that the one aspect of the embodiment is not limited to the present embodiment. For example, the present embodiment may be applied to movement on an undulating floor surface having uneven inclination. That is, the mobile body preferably moves under the anti-slip control, while adjusting the inclination of the upper body depending on a road condition.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

Reference Signs List

| 1, 1A | MOBILE ROBOT |
|---|---|
| 1B | MOBILE BODY |
| 10, 10A, 10B | UPPER BODY |
| 11 | TRUNK PART |

| 12 | WAIST PART |
| 13 | ARM |
| 15 | GRAVITY CENTER POSITION CHANGING MECHANISM |
| 20 | MOVING UNIT |
| 21 | FRAME |
| 22 | FRONT WHEEL |
| 23 | CONTROLLER |
| 23a | STEP-CLIMBING CONTROL UNIT |
| 23b | GRAVITY CENTER POSITION CHANGING UNIT |
| 23c | MOTOR DRIVE UNIT |
| 24 | REAR WHEEL |
| 25 | SPEED DETECTION UNIT |
| 30 | BALANCER |
| 501 | FLOOR SURFACE |
| 502 | STEP SURFACE |
| AXy | WAIST AXIS |
| m | MOTOR |

**Claims**

1. A mobile body comprising:

   a moving unit having a plurality of front and rear driving wheels disposed along a traveling direction;
   an upper body supported at the moving unit and configured to be able to change a gravity center position in the traveling direction; and
   a control unit configured to instruct the upper body to change the gravity center position depending on a road condition.

2. The mobile body according to claim 1, further comprising a speed detection unit configured to detect a speed, wherein, while the driving wheel abuts on a step surface being a side wall surface forming a step, the control unit drives the driving wheel by a driving force, which has been adjusted based on the speed detected by the speed detection unit such that the driving wheel has a slip ratio of a value within a predetermined range.

3. The mobile body according to claim 1 or 2, wherein the upper body is supported at the moving unit rotatably about a rotating axis substantially orthogonal to the traveling direction when viewed from above, and the control unit causes the upper body to rotate about the rotating axis depending on the road condition to change the gravity center position.

4. The mobile body according to claim 3, wherein, while the driving wheel abuts on the step surface, the control unit causes the upper body to rotate about the rotating axis by a rotating angle, which has been adjusted such that a load applied on the driving wheel is smaller than the driving force applied on the step surface by the driving wheel.

5. The mobile body according to claim 1, wherein the upper body has an arm having a base end rotatably supported at the upper body, and the control unit causes the upper body to rotate the arm to change the gravity center position.

6. A mobile body system comprising:

   a mobile body including a moving unit having a plurality of front and rear driving wheels disposed along a traveling direction, and an upper body supported at the moving unit and configured to be able to change a gravity center position in the traveling direction; and
   a control unit configured to instruct the upper body to change the gravity center position depending on a road condition.

7. The mobile body system according to claim 6, further comprising a speed detection unit configured to detect a speed of the mobile body, wherein, while the driving wheel abuts on a step surface being a side wall surface forming a step, the control unit

8

drives the driving wheel by a driving force, which has been adjusted based on the speed detected by the speed detection unit such that the driving wheel has a slip ratio of a value within a predetermined range.

# FIG.1A

# FIG.1B

TRAVELING DIRECTION

EP 2 879 009 A1

# FIG.2A

$$kM\dot{V}_y$$

$$F_d = \mu_f F$$

$$F_{dr} = (1 - k)Mg$$

$$F = \mu_r(1 - k)Mg$$

$$F_{df} = kMg$$

# FIG.2B

11

# FIG.3

# FIG.4

# FIG.5

# FIG.6

START

MOVE FORWARD UNTIL FRONT WHEEL ABUTS AGAINST STEP SURFACE — S101

SECURE PRESSING FORCE AGAINST STEP SURFACE — S102

FRONT WHEEL SIDE

ADJUST GRAVITY CENTER POSITION — S103

SUBJECT ALL DRIVING WHEELS TO ANTI-SLIP CONTROL IN ORDER THAT SLIP RATIO FALLS WITHIN OPTIMAL RANGE — S104

RAISE FRONT WHEEL DURING FORWARD MOVEMENT, WHILE CONTROLLING DRIVING FORCES OF FRONT AND REAR WHEELS — S105

MOVE FORWARD UNTIL REAR WHEEL ABUTS AGAINST STEP SURFACE — S106

SECURE PRESSING FORCE AGAINST STEP SURFACE — S107

REAR WHEEL SIDE

ADJUST GRAVITY CENTER POSITION — S108

SUBJECT ALL DRIVING WHEELS TO ANTI-SLIP CONTROL IN ORDER THAT SLIP RATIO FALLS WITHIN OPTIMAL RANGE — S109

RAISE REAR WHEEL DURING FORWARD MOVEMENT, WHILE CONTROLLING DRIVING FORCES OF FRONT AND REAR WHEELS — S110

END

# FIG.7A

# FIG.7B

## INTERNATIONAL SEARCH REPORT

International application No.

PCT/JP2012/066785

### A. CLASSIFICATION OF SUBJECT MATTER
*G05D1/02*(2006.01)i, *B25J5/00*(2006.01)i, *B62D57/02*(2006.01)i

According to International Patent Classification (IPC) or to both national classification and IPC

### B. FIELDS SEARCHED

Minimum documentation searched (classification system followed by classification symbols)
G05D1/02, B25J5/00, B62D57/02

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-1705 A  (Sanyo Electric Co., Ltd.),<br>08 January 2004 (08.01.2004),<br>paragraphs [0009] to [0016]; fig. 5 to 9<br>& US 2003/0184071 A1<br>paragraphs [0061] to [0078]; fig. 5 to 9 | 1,3–4<br>2 |
| Y | JP 2011-134184 A  (Mitsubishi Electric Corp.),<br>07 July 2011 (07.07.2011),<br>paragraphs [0011] to [0020]; fig. 1 to 3<br>(Family: none) | 2 |
| A | JP 2003-205480 A  (Ishikawajima-Harima Heavy<br>Industries Co., Ltd.),<br>22 July 2003 (22.07.2003),<br>paragraphs [0013] to [0052]; fig. 1 to 3<br>(Family: none) | 1–4 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11 September, 2012 (11.09.12) | 25 September, 2012 (25.09.12) |

| Name and mailing address of the ISA/<br>　Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2012/066785 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:

    Claims 1 to 4

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/066785

Continuation of Box No.III of continuation of first sheet(2)

The claims include three inventions (groups) having the following special technical features.

(Invention 1) Invention set forth in claims 1 to 4
A movable body provided with a speed detection unit.

(Invention 2) Invention set forth in claim 5
A movable body provided with an arm portion.

(Invention 3) Invention set forth in claims 6 and 7
A movable body system provided with a movable body and a control unit.

Form PCT/ISA/210 (extra sheet) (July 2009)

**EP 2 879 009 A1**

**REFERENCES CITED IN THE DESCRIPTION**

**Patent documents cited in the description**

- JP 2003205480 A